# EUROPEAN PATENT SPECIFICATION

(11) **EP 3 745 040 B1**
(45) Date of publication and mention of the grant of the patent: **27.03.2024**
(21) Application number: 18913163.4
(22) Date of filing: 03.07.2018
(51) Int. Cl.: F24F 11/42, F24F 11/64, F24F 110/12, F24F 11/61, F24F 13/22, F24F 110/20, F24F 140/00, F24F 140/30, G05B 19/042

(54) **CONTROL METHOD AND APPARATUS FOR WATER PUMP OF AIR CONDITIONER, AND WATER PUMP OF AIR CONDITIONER**
VERFAHREN UND VORRICHTUNG ZUR STEUERUNG EINER WASSERPUMPE EINER KLIMAANLAGE UND WASSERPUMPE EINER KLIMAANLAGE
PROCÉDÉ ET APPAREIL DE COMMANDE POUR UNE POMPE À EAU DE CLIMATISEUR ET POMPE À EAU DE CLIMATISEUR

(30) Priority: 30.03.2018 CN 201810297967
(43) Date of publication of application: 02.12.2020
(73) Proprietor: Gree Electric Appliances (Wuhan) Co., Ltd., Wuhan, Hubei 430056 (CN); Gree Electric Appliances, Inc. of Zhuhai, Zhuhai, Guangdong 519070 (CN)
(72) Inventor: TAN, Jianming, Guangdong 519070 (CN); YANG, Lin, Guangdong 519070 (CN); ZHANG, Hui, Guangdong 519070 (CN); XIE, Youfu, Guangdong 519070 (CN); YU, Kai, Guangdong 519070 (CN); LIU, Qunbo, Guangdong 519070 (CN); XUE, Handong, Guangdong 519070 (CN); LI, Weiqiang, Guangdong 519070 (CN)
(74) Representative: Inchingalo, Simona
(86) International application number: PCT/CN2018/094245
(87) International publication number: WO 2019/184127

(56) References cited:
- CN-A- 102 818 347
- CN-A- 104 896 711
- CN-A- 105 180 294
- CN-A- 106 123 205
- CN-A- 106 765 899
- CN-A- 106 989 485
- CN-U- 202 792 293
- JP-A- H0 861 687
- JP-A- S6 155 531
- US-A1- 2002 029 580

## Description

The present application claims the priority benefit of the Chinese Patent Application No. 201810297967.9, filed on March 30, 2018.

### TECHNICAL FIELD

The present invention relates to the technical field of air conditioner, and particularly to a method and an apparatus for controlling a water pump of an air conditioner, and a water pump of an air conditioner.

### BACKGROUND

At present, condensed water formed in an outdoor unit of an air conditioner under a heating mode is directly discharged outdoors through a water discharging hole. With the improvement of the living conditions and the safety awareness of people, in certain specific places and regions, it is required that the condensed water cannot be discharged outdoors directly but should be discharged to certain places by means of a water pump. In the case that the water pump is not turned on timely, the water in a base frame of the outdoor unit is apt to be frozen, and then the water pump is apt to be damaged after the water pump is turned on. When the operation of the water pump lasts too long, or the water pump keeps running all the time, it will cause a waste of energy.

In the technologies known to the inventors, no effective solution has been proposed yet for the problem that the operating time of the water pump of the air conditioner is not intelligent enough. An automatic cleaning system, an air conditioner and a control method are disclosed in document CN 104 896 711.

### SUMMARY OF THE INVENTION

According to the invention as defined in claim 1, a method for controlling a water pump of an air conditioner is provided. The method includes: acquiring a state of a liquid level switch of the air conditioner, an operation state of the air conditioner, and an outdoor ambient temperature; and determining a starting time of the water pump of the air conditioner according to the acquired state of the liquid level switch of the air conditioner, the acquired operation state of the air conditioner, and the acquired outdoor ambient temperature.

The invention further includes a step of determining the starting time of the water pump of the air conditioner according to the acquired state of the liquid level switch of the air conditioner, the acquired operation state of the air conditioner, and the acquired outdoor ambient temperature, includes: detecting whether the liquid level switch of the air conditioner is in an open state; if the liquid level switch of the air conditioner is in the open state, then controlling the water pump of the air conditioner to be turned on; and if the water pump of the air conditioner is not in the open state, then determining whether a current operation state of the air conditioner is a heating mode, and if the current operation state of the air conditioner is the heating mode, then determining the starting time of the water pump of the air conditioner according to the outdoor ambient temperature.

Further preferred embodiments of the invention as defined by the dependent claims include, a step of if the current operation state of the air conditioner is the heating mode, then determining the starting time of the water pump of the air conditioner according to the outdoor ambient temperature, includes: comparing the outdoor ambient temperature with a preset frosting temperature threshold; if the outdoor ambient temperature is greater than the frosting temperature threshold, controlling the water pump of the air conditioner to be turned on; and if the outdoor ambient temperature is less than or equal to the frosting temperature threshold, then determining whether the air conditioner enters a defrosting mode, and if the air conditioner enters the defrosting mode, then controlling the water pump of the air conditioner to be turned on.

Further, after having detected of if the liquid level switch of the air conditioner is in the open state, then controlling the water pump of the air conditioner to be turned on, the method further includes: monitoring whether the liquid level switch of the air conditioner is closed; if it is monitored that the liquid level switch of the air conditioner is closed, starting an operation of measuring time; and if the measured time reaches a first preset time threshold, controlling the water pump of the air conditioner to be turned off.

Further, after having determined if the outdoor ambient temperature is greater than the frosting temperature threshold, then controlling the water pump of the air conditioner to be turned on, the method further includes: monitoring an on/off state of the air conditioner; if it is monitored that the air conditioner is turned off, then starting an operation of measuring time; and if the timing reaches a third preset time threshold, then controlling the water pump of the air conditioner to be turned off.

Further, after having determined that the air conditioner enters the defrosting mode, then controlling the water pump of the air conditioner to be turned on, the method further includes: monitoring an on/off state of the defrosting mode; if it is monitored that the defrosting mode is off, then starting an operation of measuring time; and if the measured time reaches a second preset time threshold, then controlling the water pump of the air conditioner to be turned off.

According to another aspect of the invention, an apparatus for controlling a water pump of an air conditioner is provided, and the apparatus includes: an acquisition module configured to acquire a state of a liquid level switch of the air conditioner, an operation state of the air conditioner, and an outdoor ambient temperature; and a control module configured to determine a starting time of the water pump of the air conditioner according to the acquired state of the liquid level switch of the air conditioner, the acquired operation state of the air conditioner, and the acquired outdoor ambient temperature, the control module further includes: a detection unit configured to detect whether the liquid level switch of the air conditioner is in an open state; a first turn-on controlling unit configured to control the water pump of the air conditioner to be turned on when the liquid level switch of the air conditioner is in the open state; and a second turn-on controlling unit configured to determine whether the operation state of the air conditioner is in a heating mode when the liquid level switch of the air conditioner is not in the open state, and to determine the starting time of the water pump of the air conditioner according to the outdoor ambient temperature when the current operation state of the air conditioner is in the heating mode.

Preferably, the control module further includes: a monitoring unit configured to monitor, after the water pump of the air conditioner is controlled to be turned on when the liquid level switch of the air conditioner is in the open state, whether the liquid level switch of the air conditioner is closed; a time measuring unit configured to start an operation of measuring time when it is monitored that the liquid level switch of the air conditioner is closed; and a turn-off controlling unit configured to control the water pump of the air conditioner to be turned off when the measured time reaches a first preset time threshold.

Further, the second turn-on controlling unit may include: a comparing sub-unit configured to compare the outdoor ambient temperature with a preset frosting temperature threshold when the current operation state of the air conditioner is the heating mode; a first turn-on controlling sub-unit configured to control the water pump of the air conditioner to be turned on when the outdoor ambient temperature is greater than the frosting temperature threshold; and a second turn-on controlling sub-unit configured to determine whether the air conditioner enters a defrosting mode when the outdoor ambient temperature is less than or equal to the frosting temperature threshold, and to control the water pump of the air conditioner to be turned on when it is determined that the air conditioner enters the defrosting mode.

Further, the second turn-on controlling unit further includes: a first monitoring sub-unit configured to monitor, after the water pump of the air conditioner is controlled to be turned on when the outdoor ambient temperature is greater than the frosting temperature threshold, an on/off state of the air conditioner; a first time measuring sub-unit configured to start an operation of measuring time when it is monitored that the air conditioner is turned off; and a first turn-off controlling sub-unit configured to control the water pump of the air conditioner to be turned off when the measured time reaches a third preset time threshold.

Further, the second turn-on controlling unit further includes: a second monitoring sub-unit configured to monitor, after the water pump of the air conditioner is controlled to be turned on when it is determined that the air conditioner enters the defrosting mode, an on-off state of the defrosting mode; a second timing sub-unit configured to perform, when it is monitored that the defrosting mode is suspended, timing of operation; and a second turn-off controlling sub-unit configured to control the water pump of the air conditioner to be turned off when the timing reaches a second preset time threshold.

According to another aspect of the present disclosure, a water pump of an air conditioner is provided, and the water pump includes the apparatus for controlling the water pump of the air conditioner above.

In embodiments of the present disclosure, to avoid the problems of the damage of the water pump, or the waste of energy, caused by too short or too long operating time of the water pump of the air conditioner, a set of parameters configured to reflect whether the water pump of the air conditioner needs to be turned on are set, and the parameters include the state of the liquid level switch of the air conditioner, the operation state of the air conditioner, and the outdoor ambient temperature. The starting time of the water pump of the air conditioner is determined by means of acquiring the set of parameters. Such a control method effectively solves the problem that the operating time of the water pump of the air conditioner in the prior art is not intelligent enough, and makes the operating time of the water pump of the air conditioner more intelligent, thereby improving the safety of the water pump of the air conditioner and saving the energy.

### BRIEF DESCRIPTION OF THE DRAWINGS

The accompanying drawings, which constitute a part of this disclosure, are used to provide further understanding of the invention. The illustrative embodiments of the present disclosure and the description thereof are used to interpret the present disclosure, but not intended to constitute any improper limitation on the present invention, as defined by the appended claims. In the drawings:
FIG. 1 is a flowchart illustrating a method for controlling a water pump of an air conditioner according to an embodiment of the present disclosure;
FIG. 2 is a flowchart illustrating the method for controlling the water pump of the air conditioner according to another embodiment of the present disclosure;
FIG. 3 is a block diagram illustrating an apparatus for controlling a water pump of an air conditioner according to an embodiment of the present disclosure.

### DETAILED DESCRIPTION OF THE EMBODIMENTS

The exemplified embodiments will be described in detail herein, and the examples thereof are illustrated in the drawings. Unless stated otherwise, when the following description involves the drawings, the same numeral in different figures denotes the same or similar elements. Implementations described in the following exemplified embodiments do not represent all implementations consistent with the present disclosure. In contrast, they are merely examples of apparatus and methods, which are described in the appended claims and are consistent with some aspects of the present disclosure.

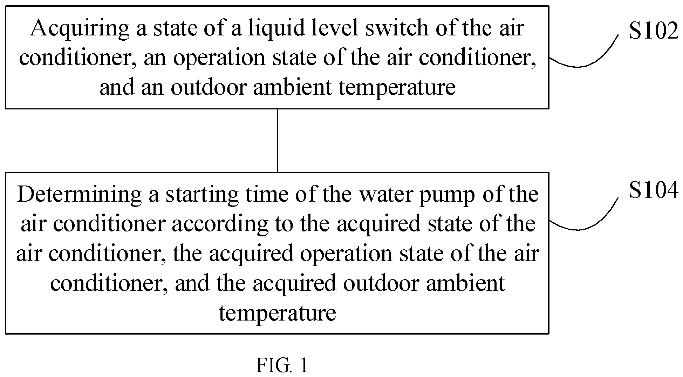

According to a first aspect of the embodiments of the present disclosure, a method for controlling a water pump of an air conditioner is provided to solve at least a problem that an operating time of the water pump of the air conditioner in the prior art is not intelligent enough. The control method can be directly applied to an air conditioner, for example, a household air-conditioning unit, an air-conditioning unit in a shopping mall or a workshop, an air-conditioning unit applied in a ship, and the like. Moreover, the method can also be applied to any other equipment having the function of an air-conditioning unit. The method can be implemented as a program embedded in the air-conditioning unit or the equipment, or can be implemented by installing an Application (APP) or software in the air-conditioning unit or the equipment. Specifically, FIG. 1 is an alternative flowchart of the method. As shown in FIG. 1, the method includes the following steps S102 to S 104.

At step S102, a state of a liquid level switch of the air conditioner, an operation state of the air conditioner, and an outdoor ambient temperature are acquired.

At step S104, a starting time of a water pump of the air conditioner is determined according to the acquired state of the liquid level switch of the air conditioner, the acquired operation state of the air conditioner, and the acquired outdoor ambient temperature.

After the state of the liquid level switch of the air conditioner, the operation state of the air conditioner, and the outdoor ambient temperature parameter, which are configured to reflect whether the water pump of the air conditioner needs to be turned on, are acquired, the starting time of the water pump of the air conditioner is determined according to the acquired state of the liquid level switch of the air conditioner, the acquired operation state of the air conditioner, and the acquired outdoor ambient temperature.

In the embodiment of the present disclosure, a set of parameters, which are configured to reflect whether the water pump of the air conditioner needs to be turned on, are set. The parameters include the state of the liquid level switch of the air conditioner, the operation state of the air conditioner, and the outdoor ambient temperature. Compared with the method in the conventional technology that the water pump of the air conditioner is controlled to start or not only according to the state of the liquid level switch of the air conditioner, the method that a plurality of parameters are configured to control the water pump of the air conditioner to start or not, is more adaptable for more other working conditions in which the water pump of the air conditioner needs to be turned on, thereby solving the problem that the water pump is easily damaged after it is turned on in some cases, for the reason that the water in the base frame of the outdoor unit is frozen when the water pump of the air conditioner does not start timely. Therefore, in the present disclosure, the set of parameters are configured to reflect whether the water pump of the air conditioner needs to be turned on or not, and based on this set of parameters, it can be more accurately determined whether the air conditioner needs to be turned on.

In the invention, the step S104 specifically includes: first detecting whether the liquid level switch of the air conditioner is in an open state. If a detection result is that the liquid level switch of the air conditioner is in the open state, the water pump of the air conditioner is directly controlled to be turned on. If the detection result is that the liquid level switch of the air conditioner is not in the open state, then it is determined whether the operation state of the air conditioner is a heating mode. If the current operation state of the air conditioner is the heating mode, then the starting time of the water pump of the air conditioner is determined according to the outdoor ambient temperature.

In some embodiments, the step of determining the starting time of the water pump of the air conditioner according to the outdoor ambient temperature if the current operation state of the air conditioner is the heating mode specifically includes: when the operation state of the air conditioner is the heating mode, comparing the outdoor ambient temperature with a preset frosting temperature threshold. The preset frosting temperature threshold is a critical temperature, for example, 0 degree, configured to determine whether a condenser pipe of the air conditioner in the heating mode is frosted up or whether condensed water is formed. If the outdoor ambient temperature is greater than the frosting temperature threshold, the outdoor unit of the air conditioner may produce condensed water, and at this moment, the water pump of the air conditioner is controlled to be turned on; if the outdoor ambient temperature is less than or equal to the frosting temperature threshold, the outdoor unit of the air conditioner may be frosted up, and at this moment, it is required to determine whether the air conditioner enters a defrosting mode. If it is determined that the air conditioner enters the defrosting mode, the outdoor unit of the air conditioner may produce condensed water, and the water pump of the air conditioner is controlled to be turned on.

In the above-mentioned implementations, to avoid the problems of the damage of the water pump, or the waste of energy, caused by too short or too long operating time of the water pump of the air conditioner, a set of parameters configured to reflect whether the water pump of the air conditioner needs to be turned on are set, and the parameters include the state of the liquid level switch of the air conditioner, the operation state of the air conditioner, and the outdoor ambient temperature. The starting time of the water pump of the air conditioner is determined by means of acquiring the set of parameters. Such a control method effectively solves the problem that the operating time of the water pump of the air conditioner in the prior art is not intelligent enough, and makes the operating time of the water pump of the air conditioner more intelligent, thereby improving the safety of the water pump of the air conditioner and saving the energy.

In some embodiments of the present disclosure, not only the starting time of the water pump of the air conditioner, but also a stopping time of the water pump of the air conditioner is controlled intelligently. The control method further includes: after the water pump of the air conditioner is controlled to be turned on when the liquid level switch of the air conditioner is in an open state, monitoring whether the liquid level switch of the air conditioner is closed; if it is monitored that the liquid level switch of the air conditioner is closed, starting an operation of measuring time; if the measured time reaches a first preset time threshold, controlling the water pump of the air conditioner to be turned off.

According to an embodiment of the present disclosure, after the liquid level switch of the air conditioner is closed, it is possible that residual condensed water is not discharged yet, and the water pump is not turned off instantly, but is not turned off until the liquid level switch of the air conditioner has been closed for a time reaching the first preset time threshold. Namely, in the present disclosure, the stopping time of the water pump of the air conditioner is delayed, thereby enabling the condensed water to be discharged completely, and avoiding the problem caused by the residual condensed water.

Further, in some embodiments, the intelligent control for the stopping time of the water pump of the air conditioner further includes: after the water pump of the air conditioner is controlled to be turned on when the outdoor ambient temperature is greater than the frosting temperature threshold, monitoring an on/off state of the air conditioner; if it is monitored that the air conditioner is turned off, starting an operation of measuring time; when the measured time reaches a third preset time threshold, controlling the water pump of the air conditioner to be turned off.

In some embodiments, the intelligent control for the stopping time of the water pump of the air conditioner further includes: after the water pump of the air conditioner is controlled to be turned on when it is determined that the air conditioner enters the defrosting mode, monitoring an on/off state of the defrosting mode; if it is monitored that the defrosting mode is off, starting an operation of measuring time; if the measured time reaches a second preset time threshold, controlling the water pump of the air conditioner to be turned off.

Likewise, when the air conditioner is turned off, or when the defrosting of the air conditioner is finished, the water pump is not turned off instantly, but is not turned off until the air conditioner has been off for a time reaching the third preset time threshold, or until the defrosting of the air conditioner has been over for a time reaching the second preset time threshold, namely the stopping time of the water pump of the air conditioner is delayed, thereby enabling the condensed water to be discharged completely, and avoiding the problem caused by the residual condensed water.

In some embodiments, prior to acquiring the state of the liquid level switch of the air conditioner, the operation state of the air conditioner, and the outdoor ambient temperature, the control method of the present disclosure further includes: regulating at least one of the first preset time threshold, the second preset time threshold, and the third preset time threshold through a communication interface for presetting in response to a triggered regulating instruction, where the air conditioner is provided with the communication interface for presetting. Namely, in the present disclosure, the first preset time threshold, the second preset time threshold, and the third preset time threshold are time constants, which can be set according to different dimensions of units and different environmental requirements.

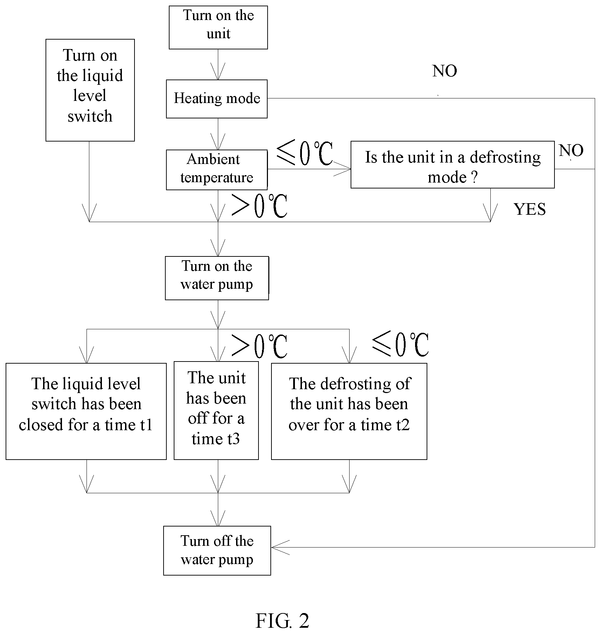

As for another embodiment of the method for controlling the water pump of the air conditioner of the present disclosure, FIG. 2 is an alternative flowchart of the method. The present disclosure will be described in detail combining with FIG. 2. The method includes the following steps.

The unit is turned on.

Detect whether the liquid level switch of the outdoor unit is open, and the water pump is controlled to be turned on when the liquid level switch is in the open state.

When the liquid level switch is in the closed state, detect whether the air conditioner is in the heating mode; when the air conditioner is not in the heating mode, the water pump is not turned on; when the air conditioner is in the heating mode, the outdoor ambient temperature is detected through an ambient temperature sensing bulb, and determine an interval in which the outdoor ambient temperature falls.

If the ambient temperature is greater than 0°C (the frosting temperature threshold), the water pump is turned on; if the ambient temperature is less than or equal to 0°C, determine whether the unit is performing a defrosting operation.

If the unit is not performing the defrosting operation, the water pump is not turned on; and if the unit is performing the defrosting operation, the water pump is turned on.

When the unit is detected that the liquid level switch is closed during the operation of the outdoor unit, and that the liquid level switch has been closed for a time reaching a time period t1 (where t1 is a time constant corresponding to the first preset time threshold), the water pump is turned off.

When the unit is detected that the unit is turned off during the operation of the outdoor unit, and that the off state of the unit lasts for a time period t3 (where t3 is a time constant corresponding to the third preset time threshold), the water pump is turned off.

When the unit is detected that the defrosting of the unit is finished during the operation of the outdoor unit, and that the defrosting has been over for a time reaching t2 (where t2 is a time constant corresponding to the second preset time threshold), the water pump is turned off.

In this embodiment, t1, t2, and t3 are time constants, and can be regulated to be different time values according to different dimensions of units and different environmental requirements.

In the above-mentioned implementations, to avoid the problems of the damage of the water pump, or the waste of energy, caused by the too short or too long operating time of the water pump of the air conditioner, a set of parameters configured to reflect whether the water pump of the air conditioner needs to be turned on are set, and the parameters include the state of the liquid level switch of the air conditioner, the operation state of the air conditioner, and the outdoor ambient temperature. The starting time of the water pump of the air conditioner is determined by means of acquiring the set of parameters. Such a control method effectively solves the problem that the operating time of the water pump of the air conditioner in the prior art is not intelligent enough, and makes the operating time of the water pump of the air conditioner more intelligent, thereby improving the safety of the water pump of the air conditioner and saving the energy.

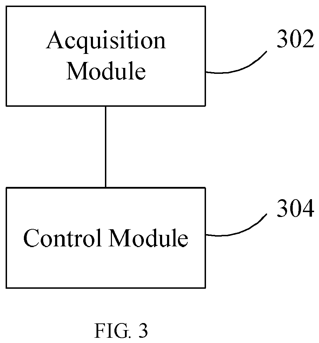

Based on the method for controlling the water pump of the air conditioner in the above-mentioned embodiments, and according to a second aspect of the present disclosure, an apparatus for controlling a water pump of an air conditioner is further provided. FIG. 3 is an alternative structure block diagram of the apparatus. As shown in FIG. 3, the apparatus includes the following modules.

An acquisition module 302 is configured to acquire a state of a liquid level switch of the air conditioner, an operation state of the air conditioner, and an outdoor ambient temperature.

A control module 304 is connected to the acquisition module 302. The control module 304 is configured to determine a starting time of the water pump of the air conditioner according to the acquired state of the liquid level switch of the air conditioner, the acquired operation state of the air conditioner, and the acquired outdoor ambient temperature.

In this embodiment, to avoid the problems of the damage of the water pump, or the waste of energy, caused by the too short or too long operating time of the water pump of the air conditioner, a set of parameters configured to reflect whether the water pump of the air conditioner needs to be turned on are set, and the parameters include the state of liquid level switch of the air conditioner, the operation state of the air conditioner, and the outdoor ambient temperature. The starting time of the water pump of the air conditioner is determined by means of acquiring the set of parameters. Such a control method effectively solves the problem that the operating time of the water pump of the air conditioner in the prior art is not intelligent enough, and makes the operating time of the water pump of the air conditioner more intelligent, thereby improving the safety of the water pump of the air conditioner and saving the energy.

In another embodiment of the present disclosure, the control module includes: a detection unit configured to detect whether the liquid level switch of the air conditioner is in an open state; a first turn-on controlling unit configured to control the water pump of the air conditioner to be turned on when the liquid level switch of the air conditioner is in the open state; and a second turn-on controlling unit configured to determine whether the operation state of the air conditioner is in a heating mode when the liquid level switch of the air conditioner is not in the open state, and to determine the starting time of the water pump of the air conditioner according to the outdoor ambient temperature when the current operation state of the air conditioner is in the heating mode.

In some embodiments, the control module further includes: a monitoring unit configured to monitor whether the liquid level switch of the air conditioner is closed after the water pump of the air conditioner is controlled to be turned on when the liquid level switch of the air conditioner is in the open state; a time measuring unit configured to start an operation of measuring time when it is monitored that the liquid level switch of the air conditioner is closed; and a turn-off controlling unit configured to control the water pump of the air conditioner to be turned off when the measured time reaches the first preset time threshold.

In some other embodiments of the present disclosure, the second turn-on controlling unit includes: a comparing sub-unit configured to compare the outdoor ambient temperature with the preset frosting temperature threshold when the operation state of the air conditioner is the heating mode; a first turn-on controlling sub-unit configured to control the water pump of the air conditioner to be turned on when the outdoor ambient temperature is greater than the frosting temperature threshold; and a second turn-on controlling sub-unit configured to determine whether the air conditioner enters the defrosting mode when the outdoor ambient temperature is less than or equal to the frosting temperature threshold, and to control the water pump of the air conditioner to be turned on when it is determined that the air conditioner enters the defrosting mode.

In some embodiments, the second turn-on controlling unit further includes: a first monitoring sub-unit configured to monitor the on/off state of the air conditioner after the water pump of the air conditioner is controlled to be turned on when the outdoor ambient temperature is greater than the frosting temperature threshold; a first time measuring sub-unit configured to start the operation of measuring time when it is monitored that the air conditioner is turned off; and a first turn-off controlling sub-unit configured to control the water pump of the air conditioner to be turned off after the measured time reaches the third preset time threshold.

In some embodiments, the second turn-on controlling unit further includes: a second monitoring sub-unit configure to monitor the on/off state of the defrosting mode after the water pump of the air conditioner is controlled to be turned on when it is determined that the air conditioner enters the defrosting mode; a second time measuring sub-unit configured to perform the operation of measuring time when it is monitored that the defrosting mode is off; and a second turn-off controlling sub-unit configured to control the water pump of the air conditioner to be turned off when the measured time reaches the second preset time threshold.

According to a third aspect of the present disclosure, a water pump of an air conditioner is further provided. The water pump of the air conditioner includes the above-mentioned apparatus for controlling the water pump of the air conditioner.

Regarding the apparatus in the above embodiments, the specific implementations of the operations performed by each unit and module have been described in detail in the embodiments related to the method, and they will not be illustrated in detail herein.

Other embodiments of the present disclosure may be obvious for those skilled in the art from consideration of the specification and practice of the present disclosure herein. The present application is intended to cover any variation, usage, or adaptive change of the present disclosure, which complies with the scope of the invention as defined in the appended claims.

## Claims

1. A method for controlling a water pump of an air conditioner, comprising:
acquiring a state of a liquid level switch of the air conditioner, an operation state of the air conditioner, and an outdoor ambient temperature; and
determining a starting time of the water pump of the air conditioner according to the acquired state of the liquid level switch of the air conditioner, the acquired operation state of the air conditioner, and the acquired outdoor ambient temperature;
**characterized in that** a step of determining the starting time of the water pump of the air conditioner according to the acquired state of the liquid level switch of the air conditioner, the acquired operation state of the air conditioner, and the acquired outdoor ambient temperature, comprises:
detecting whether the liquid level switch of the air conditioner is in an open state;
if the liquid level switch of the air conditioner is in the open state, then controlling the water pump of the air conditioner to be turned on; and
if the water pump of the air conditioner is not in the open state, then determining whether a current operation state of the air conditioner is a heating mode, and if the current operation state of the air conditioner is the heating mode, then determining the starting time of the water pump of the air conditioner according to the outdoor ambient temperature.

2. The method for controlling the water pump of the air conditioner according to claim 1, **characterized in that** a step of if the current operation state of the air conditioner is the heating mode, then determining the starting time of the water pump of the air conditioner according to the outdoor ambient temperature, comprises:
comparing the outdoor ambient temperature with a preset frosting temperature threshold;
if the outdoor ambient temperature is greater than the frosting temperature threshold, controlling the water pump of the air conditioner to be turned on; and
if the outdoor ambient temperature is less than or equal to the frosting temperature threshold, then determining whether the air conditioner enters a defrosting mode, and if the air conditioner enters the defrosting mode, then controlling the water pump of the air conditioner to be turned on.

3. The method for controlling the water pump of the air conditioner according to claim 1, after having detected whether the liquid level switch is in the open state and after controlling the water pump of the air conditioner to be turned on, further comprising:
monitoring whether the liquid level switch of the air conditioner is closed;
if it is monitored that the liquid level switch of the air conditioner is closed, starting an operation of measuring time; and
if the measured time reaches a first preset time threshold, controlling the water pump of the air conditioner to be turned off.

4. The method for controlling the water pump of the air conditioner according to claim 2, after having determined whether the outdoor ambient temperature is greater than the frosting temperature threshold and after controlling the water pump of the air conditioner to be turned on,
further comprising:
monitoring an on/off state of the air conditioner;
if it is monitored that the air conditioner is turned off, then starting an operation of measuring time; and
if the timing reaches a third preset time threshold, then controlling the water pump of the air conditioner to be turned off.

5. The method for controlling the water pump of the air conditioner according to claim 2, after having determined that the air conditioner enters the defrosting mode and after controlling the water pump of the air conditioner to be turned on, further comprising:
monitoring an on/off state of the defrosting mode;
if it is monitored that the defrosting mode is off, then starting an operation of measuring time; and
if the measured time reaches a second preset time threshold, then controlling the water pump of the air conditioner to be turned off.

6. An apparatus for controlling a water pump of an air conditioner, comprising:
an acquisition module configured to acquire a state of a liquid level switch of the air conditioner, an operation state of the air conditioner, and an outdoor ambient temperature; and
a control module configured to determine a starting time of the water pump of the air conditioner according to the acquired state of the liquid level switch of the air conditioner, the acquired operation state of the air conditioner, and the acquired outdoor ambient temperature; **characterized in that** the control module comprises:
a detection unit configured to detect whether the liquid level switch of the air conditioner is in an open state;
a first turn-on controlling unit configured to control the water pump of the air conditioner to be turned on when the liquid level switch of the air conditioner is in the open state; and
a second turn-on controlling unit configured to determine whether the operation state of the air conditioner is in a heating mode when the liquid level switch of the air conditioner is not in the open state, and to determine the starting time of the water pump of the air conditioner according to the outdoor ambient temperature when the current operation state of the air conditioner is in the heating mode.

7. The apparatus for controlling the water pump of the air conditioner according to claim 6, **characterized in that**, the control module further comprises:
a monitoring unit configured to monitor, after the water pump of the air conditioner is controlled to be turned on when the liquid level switch of the air conditioner is in the open state, whether the liquid level switch of the air conditioner is closed;
a time measuring unit configured to start an operation of measuring time when it is monitored that the liquid level switch of the air conditioner is closed; and
a turn-off controlling unit configured to control the water pump of the air conditioner to be turned off when the measured time reaches a first preset time threshold.

8. The apparatus for controlling the water pump of the air conditioner according to claim 6, **characterized in that**, the second turn-on controlling unit comprises:
a comparing sub-unit configured to compare the outdoor ambient temperature with a preset frosting temperature threshold when the current operation state of the air conditioner is the heating mode;
a first turn-on controlling sub-unit configured to control the water pump of the air conditioner to be turned on when the outdoor ambient temperature is greater than the frosting temperature threshold; and
a second turn-on controlling sub-unit configured to determine whether the air conditioner enters a defrosting mode when the outdoor ambient temperature is less than or equal to the frosting temperature threshold, and to control the water pump of the air conditioner to be turned on when it is determined that the air conditioner enters the defrosting mode.

9. The apparatus for controlling the water pump of the air conditioner according to claim 6, **characterized in that**, the second turn-on controlling unit further comprises:
a first monitoring sub-unit configured to monitor, after the water pump of the air conditioner is controlled to be turned on when the outdoor ambient temperature is greater than the frosting temperature threshold, an on/off state of the air conditioner;
a first time measuring sub-unit configured to start an operation of measuring time when it is monitored that the air conditioner is turned off; and
a first turn-off controlling sub-unit configured to control the water pump of the air conditioner to be turned off when the measured time reaches a third preset time threshold.

10. The apparatus for controlling the water pump of the air conditioner according to claim 8, wherein the second turn-on controlling unit further comprises:
a second monitoring sub-unit configured to monitor, after the water pump of the air conditioner is controlled to be turned on when it is determined that the air conditioner enters the defrosting mode, an on-off state of the defrosting mode;
a second timing sub-unit configured to perform, when it is monitored that the defrosting mode is suspended, timing of operation; and
a second turn-off controlling sub-unit configured to control the water pump of the air conditioner to be turned off when the timing reaches a second preset time threshold.

11. A water pump of an air conditioner, **characterized by** comprising the apparatus for controlling the water pump of the air conditioner of claim 6.

## Patentansprüche

1. Verfahren zur Steuerung einer Wasserpumpe einer Klimaanlage, umfassend:
Erfassen eines Zustands eines Flüssigkeitsniveauschalters der Klimaanlage, eines Betriebszustands der Klimaanlage und einer Außenumgebungstemperatur, und
Festlegen einer Startzeit der Wasserpumpe der Klimaanlage je nach dem erfassten Zustand des Flüssigkeitsniveauschalters der Klimaanlage, des erfassten Betriebszustands der Klimaanlage und der erfassten Außenumgebungstemperatur;
**dadurch gekennzeichnet, dass** ein Schritt zum Festlegen der Startzeit der Wasserpumpe der Klimaanlage je nach dem erfassten Zustand des Flüssigkeitsniveauschalters der Klimaanlage, des erfassten Betriebszustands der Klimaanlage und der erfassten Außenumgebungstemperatur Folgendes umfasst:
Erkennen, ob sich der Flüssigkeitsniveauschalter der Klimaanlage in einem offenen Zustand befindet;
wenn sich der Flüssigkeitsniveauschalter der Klimaanlage im offenen Zustand befindet, Steuern der Wasserpumpe der Klimaanlage, sodass diese eingeschaltet wird, und
wenn sich die Wasserpumpe der Klimaanlage nicht im offenen Zustand befindet, Ermitteln, ob ein aktueller Betriebszustand der Klimaanlage ein Heizmodus ist, und wenn der aktuelle Betriebszustand der Klimaanlage der Heizmodus ist, Festlegen der Startzeit der Wasserpumpe der Klimaanlage je nach der Außenumgebungstemperatur.

2. Verfahren zur Steuerung der Wasserpumpe der Klimaanlage nach Anspruch 1, **dadurch gekennzeichnet, dass** ein Schritt zum Festlegen der Startzeit der Wasserpumpe der Klimaanlage je nach der Außenumgebungstemperatur, wenn der aktuelle Zustand der Klimaanlage der Heizmodus ist, Folgendes umfasst:
Vergleichen der Außenumgebungstemperatur mit einem voreingestellten Frosttemperaturschwellenwert;
wenn die Außenumgebungstemperatur höher ist als der Frosttemperaturschwellenwert, Steuern des Wasserpumpe der Klimaanlage, sodass diese eingeschaltet wird, und
wenn die Außenumgebungstemperatur kleiner oder gleich dem Frosttemperaturschwellenwert ist, Ermitteln, ob die Klimaanlage in einen Entfrostungsmodus schaltet, und wenn die Klimaanlage in den Entfrostungsmodus schaltet, Steuern der Wasserpumpe der Klimaanlage, sodass diese eingeschaltet wird.

3. Verfahren zur Steuerung der Wasserpumpe der Klimaanlage nach Anspruch 1, das nach dem Erkennen, ob sich der Flüssigkeitsniveauschalter im offenen Zustand befindet und nach dem Steuern der Wasserpumpe der Klimaanlage, sodass diese eingeschaltet wird, Folgendes umfasst:
Überwachen, ob der Flüssigkeitsniveauschalter der Klimaanlage geschlossen ist;
wenn überwacht wird, dass der Flüssigkeitsniveauschalter der Klimaanlage geschlossen ist, Starten eines Zeitmessungsvorgangs, und
wenn die gemessene Zeit einen ersten voreingestellten Zeitschwellenwert erreicht, Steuern der Wasserpumpe der Klimaanlage, sodass diese ausgeschaltet wird.

4. Verfahren zur Steuerung der Wasserpumpe der Klimaanlage nach Anspruch 2, das nach dem Erkennen, ob die Außenumgebungstemperatur höher als der Frosttemperaturschwellenwert ist, und nach dem Steuern der Wasserpumpe der Klimaanlage, sodass diese eingeschaltet wird, zudem Folgendes umfasst:
Überwachen eines Ein-/Aus-Zustands der Klimaanlage;
wenn überwacht wird, dass die Klimaanlage ausgeschaltet ist, Starten eines Zeitmessungsvorgangs, und
wenn die Zeitmessung einen dritten voreingestellten Zeitschwellenwert erreicht, Steuern der Wasserpumpe der Klimaanlage, sodass diese ausgeschaltet wird.

5. Verfahren zur Steuerung der Wasserpumpe der Klimaanlage nach Anspruch 2, das, nachdem festgestellt wurde, dass die Klimaanlage in den Entfrostungsmodus schaltet, und nach dem Steuern der Wasserpumpe der Klimaanlage, sodass diese ausgeschaltet wird, zudem Folgendes umfasst:
Überwachen eines Ein-/Aus-Zustands des Entfrostungsmodus;
wenn überwacht wird, dass der Entfrostungsmodus ausgeschaltet ist, Starten eines Zeitmessungsvorgangs, und
wenn die gemessene Zeit einen zweiten voreingestellten Zeitschwellenwert erreicht, Steuern der Wasserpumpe der Klimaanlage, sodass diese ausgeschaltet wird.

6. Vorrichtung zur Steuerung einer Wasserpumpe einer Klimaanlage, umfassend:
ein Erfassungsmodul, das ausgelegt ist, um einen Zustand eines Flüssigkeitsniveauschalters der Klimaanlage, einen Betriebszustand der Klimaanlage und eine Außenumgebungstemperatur zu erfassen, und
ein Steuerungsmodul, das ausgelegt ist, um eine Startzeit der Wasserpumpe der Klimaanlage je nach dem erfassten Zustand des Flüssigkeitsniveauschalters der Klimaanlage, des erfassten Betriebszustands der Klimaanlage und der erfassten Außenumgebungstemperatur festzulegen, **dadurch gekennzeichnet, dass** das Steuerungsmodul Folgendes umfasst:
eine Erkennungseinheit, die ausgelegt ist, um zu erkennen, ob sich der Flüssigkeitsniveauschalter der Klimaanlage in einem offenen Zustand befindet;
eine erste Einschaltsteuerungseinheit, die ausgelegt ist, um die Wasserpumpe der Klimaanlage so zu steuern, dass diese eingeschaltet wird, wenn sich der Flüssigkeitsniveauschalter der Klimaanlage im offenen Zustand befindet, und
eine zweite Einschaltsteuerungseinheit, die ausgelegt ist, um zu ermitteln, ob der Betriebszustand der Klimaanlage ein Heizmodus ist, wenn sich der Flüssigkeitsniveauschalter der Klimaanlage nicht im offenen Zustand befindet, und um die Startzeit der Wasserpumpe der Klimaanlage je nach der Außenumgebungstemperatur festzulegen, wenn der aktuelle Betriebszustand der Klimaanlage der Heizmodus ist.

7. Vorrichtung zur Steuerung der Wasserpumpe der Klimaanlage nach Anspruch 6, **dadurch gekennzeichnet, dass** das Steuerungsmodul zudem Folgendes umfasst:
eine Überwachungseinheit, die ausgelegt ist, um zu überwachen, ob der Flüssigkeitsniveauschalter der Klimaanlage geschlossen ist, nachdem die Wasserpumpe der Klimaanlage so gesteuert wurde, dass sie eingeschaltet wird, wenn sich der Flüssigkeitsniveauschalter der Klimaanlage im offenen Zustand befindet;
eine Zeitmessungseinheit, die ausgelegt ist, um einen Zeitmessungsvorgang zu starten, wenn überwacht wird, dass der Flüssigkeitsniveauschalter der Klimaanlage geschlossen ist, und
eine Ausschaltsteuerungseinheit, die ausgelegt ist, um die Wasserpumpe der Klimaanlage so zu steuern, dass sie ausgeschaltet wird, wenn die gemessene Zeit einen ersten voreingestellten Zeitschwellenwert erreicht.

8. Vorrichtung zur Steuerung der Wasserpumpe der Klimaanlage nach Anspruch 6, **dadurch gekennzeichnet, dass** die zweite Einschaltsteuerungseinheit Folgendes umfasst:
eine Vergleichsuntereinheit, die ausgelegt ist, um die Außenumgebungstemperatur mit einem voreingestellten Frosttemperaturschwellenwert zu vergleichen, wenn der aktuelle Betriebszustand der Klimaanlage der Heizmodus ist;
eine erste Einschaltsteuerungsuntereinheit, die ausgelegt ist, um die Wasserpumpe der Klimaanlage so zu steuern, dass sie eingeschaltet wird, wenn die Außenumgebungstemperatur höher ist als der Frosttemperaturschwellenwert, und
eine zweite Einschaltsteuerungsuntereinheit, die ausgelegt ist, um zu ermitteln, ob die Klimaanlage in einen Entfrostungsmodus schaltet, wenn die Außenumgebungstemperatur kleiner oder gleich dem Frosttemperaturschwellenwert ist, und um die Wasserpumpe der Klimaanlage so zu steuern, dass sie eingeschaltet wird, wenn festgestellt wird, dass die Klimaanlage in den Entfrostungsmodus schaltet.

9. Vorrichtung zur Steuerung der Wasserpumpe der Klimaanlage nach Anspruch 6, **dadurch gekennzeichnet, dass** die zweite Einschaltsteuerungseinheit zudem Folgendes umfasst:
eine erste Überwachungsuntereinheit, die ausgelegt ist, um einen Ein-/Aus-Zustand der Klimaanlage zu überwachen, nachdem die Wasserpumpe der Klimaanlage so gesteuert wurde, dass sie eingeschaltet wird, wenn die Außenumgebungstemperatur größer als der Frosttemperaturschwellenwert ist;
eine erste Zeitmessungsuntereinheit, die ausgelegt ist, um einen Zeitmessungsvorgang zu starten, wenn überwacht wird, dass die Klimaanlage ausgeschaltet ist, und
eine erste Ausschaltsteuerungsuntereinheit, die ausgelegt ist, um die Wasserpumpe der Klimaanlage so zu steuern, dass sie ausgeschaltet wird, wenn die gemessene Zeit einen dritten voreingestellten Zeitschwellenwert erreicht.

10. Vorrichtung zur Steuerung der Wasserpumpe der Klimaanlage nach Anspruch 8, wobei die zweite Einschaltsteuerungseinheit zudem Folgendes umfasst:
eine zweite Überwachungsuntereinheit, die ausgelegt ist, um einen Ein-/Aus-Zustand des Entfrostungsmodus zu überwachen, nachdem die Wasserpumpe der Klimaanlage so gesteuert wurde, dass sie eingeschaltet wird, wenn festgestellt wird, dass die Klimaanlage in den Entfrostungsmodus schaltet;
eine zweite Zeitmessungsuntereinheit, die ausgelegt ist, um die Vorgangszeitmessung durchzuführen, wenn überwacht wird, dass der Entfrostungsmodus ausgesetzt ist, und
eine zweite Ausschaltsteuerungsuntereinheit, die ausgelegt ist, um die Wasserpumpe der Klimaanlage so zu steuern, dass die ausgeschaltet wird, wenn die Zeitmessung einen zweiten voreingestellten Zeitschwellenwert erreicht.

11. Wasserpumpe einer Klimaanlage, **dadurch gekennzeichnet, dass** sie die Vorrichtung zur Steuerung der Wasserpumpe der Klimaanlage nach Anspruch 6 umfasst.

## Revendications

1. Procédé de commande d'une pompe à eau d'un climatiseur, comprenant :
acquérir un état d'un interrupteur de niveau de liquide du climatiseur, un état de fonctionnement du climatiseur et une température ambiante extérieure ; et
déterminer un temps de démarrage de la pompe à eau du climatiseur selon l'état acquis de l'interrupteur de niveau de liquide du climatiseur, de l'état de fonctionnement acquis du climatiseur et de la température ambiante extérieure acquise ;
**caractérisé en ce qu'**une étape de détermination du temps de démarrage de la pompe à eau du climatiseur selon l'état acquis de l'interrupteur de niveau de liquide du climatiseur, de l'état de fonctionnement acquis du climatiseur et de la température ambiante extérieure acquise, comprend :
détecter si l'interrupteur de niveau de liquide du climatiseur se trouve dans un état ouvert ;
si l'interrupteur de niveau de liquide du climatiseur se trouve dans l'état ouvert, alors commander la mise en marche de la pompe à eau du climatiseur ; et
si la pompe à eau du climatiseur ne se trouve pas dans l'état ouvert, alors déterminer si un état de fonctionnement actuel du climatiseur est un mode de chauffage, et si l'état de fonctionnement actuel du climatiseur est le mode de chauffage, alors déterminer le temps de démarrage de la pompe à eau du climatiseur selon la température ambiante extérieure.

2. Procédé de commande de la pompe à eau du climatiseur selon la revendication 1, **caractérisé en ce qu'**une étape consistant à déterminer le temps de démarrage de la pompe à eau du climatiseur selon la température ambiante extérieure, si l'état de fonctionnement actuel du climatiseur est le mode chauffage, comprend :
comparer la température ambiante extérieure à un seuil de température de gel prédéfini ;
si la température ambiante extérieure est supérieure au seuil de température de gel, commander la mise en marche de la pompe à eau du climatiseur ; et
si la température ambiante extérieure est inférieure ou égale au seuil de température de gel, alors déterminer si le climatiseur passe en mode dégel, et si le climatiseur passe en mode dégel, alors commander la mise en marche de la pompe à eau du climatiseur.

3. Procédé de commande de la pompe à eau du climatiseur selon la revendication 1, après avoir détecté si l'interrupteur de niveau de liquide se trouve dans l'état ouvert et après avoir commandé la mise en marche de la pompe à eau du climatiseur, comprenant de plus :
contrôler si l'interrupteur de niveau de liquide du climatiseur est fermé ;
s'il est contrôlé que l'interrupteur de niveau de liquide du climatiseur est fermé, commencer une opération de mesure du temps ; et
si le temps mesuré atteint un premier seuil de temps prédéfini, commander l'arrêt de la pompe à eau du climatiseur.

4. Procédé de commande de la pompe à eau du climatiseur selon la revendication 2, après avoir déterminé si la température ambiante extérieure est supérieure au seuil de température de gel et après avoir commandé la mise en marche de la pompe à eau du climatiseur, comprenant de plus :
contrôler un état de marche/d'arrêt du climatiseur ;
s'il est contrôlé que le climatiseur est éteint, alors commencer une opération de mesure du temps ; et
si le minutage atteint un troisième seuil de temps prédéfini, alors commander l'arrêt de la pompe à eau du climatiseur.

5. Procédé de commande de la pompe à eau du climatiseur selon la revendication 2, après avoir déterminé que le climatiseur passe en mode dégel et après avoir commandé la mise en marche de la pompe à eau du climatiseur, comprenant de plus :
contrôler un état de marche/d'arrêt du mode dégel ;
s'il est contrôlé que le mode dégel est désactivé, alors commencer une opération de mesure du temps ; et
si le temps mesuré atteint un deuxième seuil prédéfini, alors commander l'arrêt de la pompe à eau du climatiseur.

6. Appareil de commande d'une pompe à eau d'un climatiseur, comprenant :
un module d'acquisition configuré pour acquérir un état d'un interrupteur de niveau de liquide du climatiseur, un état de fonctionnement du climatiseur et une température ambiante extérieure ; et
un module de commande configuré pour déterminer un temps de démarrage de la pompe à eau du climatiseur selon l'état acquis de l'interrupteur de niveau de liquide du climatiseur, de l'état de fonctionnement acquis du climatiseur et de la température ambiante extérieure acquise ; **caractérisé en ce que** le module de commande comprend :
une unité de détection configurée pour détecter si l'interrupteur de niveau de liquide du climatiseur se trouve dans un état ouvert ;
une première unité de commande de mise en marche configurée pour commander la mise en marche de la pompe à eau du climatiseur lorsque l'interrupteur de niveau de liquide du climatiseur se trouve dans l'état ouvert ; et
une deuxième unité de commande de mise en marche configurée pour déterminer si l'état de fonctionnement du climatiseur est en mode chauffage lorsque l'interrupteur de niveau de liquide du climatiseur ne se trouve pas dans l'état ouvert, et pour déterminer le temps de démarrage de la pompe à eau du climatiseur en fonction de la température ambiante extérieure lorsque le climatiseur est en mode chauffage.

7. Appareil de commande de la pompe à eau du climatiseur selon la revendication 6, **caractérisé en ce que** le module de commande comprend de plus :
une unité de contrôle configurée pour contrôler, après que la pompe à eau du climatiseur a été commandée pour être mise en marche lorsque l'interrupteur de niveau de liquide du climatiseur se trouve dans l'état ouvert, si l'interrupteur de niveau de liquide du climatiseur est fermé ;
une unité de mesure de temps configurée pour commencer une opération de mesure du temps lorsqu'il est contrôlé que l'interrupteur de niveau de liquide du climatiseur est fermé ; et
une unité de commande d'arrêt configurée pour commander l'arrêt de la pompe à eau du climatiseur lorsque le temps mesuré atteint un premier seuil de temps prédéfini.

8. Appareil de commande de la pompe à eau du climatiseur selon la revendication 6, **caractérisé en ce que** la deuxième unité de commande de mise en marche comprend :
une sous-unité de comparaison configurée pour comparer la température ambiante extérieure à un seuil de température de gel prédéfini lorsque l'état de fonctionnement actuel du climatiseur est le mode chauffage ;
une première sous-unité de commande de mise en marche configurée pour commander la mise en marche de la pompe à eau du climatiseur lorsque la température ambiante extérieure est supérieure au seuil de température de gel ; et
une deuxième sous-unité de commande de mise en marche configurée pour déterminer si le climatiseur passe en mode dégel lorsque la température ambiante extérieure est inférieure ou égale au seuil de température de gel, et pour commander la mise en marche de la pompe à eau du climatiseur lorsqu'il est déterminé que le climatiseur passe en mode dégel.

9. Appareil de commande de la pompe à eau du climatiseur selon la revendication 6, **caractérisé en ce que** la deuxième unité de commande de mise en marche comprend de plus :
une première sous-unité de contrôle configurée pour contrôler, après que la pompe à eau du climatiseur a été commandée pour être mise en marche lorsque la température ambiante extérieure est supérieure au seuil de température de gel, un état de marche/d'arrêt du climatiseur ;
une première sous-unité de mesure de temps configurée pour commencer une opération de mesure du temps lorsqu'il est contrôlé que le climatiseur est éteint ; et
une première sous-unité de commande d'arrêt configurée pour commander l'arrêt de la pompe à eau du climatiseur lorsque le temps mesuré atteint un troisième seuil de temps prédéfini.

10. Appareil de commande de la pompe à eau du climatiseur selon la revendication 8, dans lequel la deuxième unité de commande de mise en marche comprend de plus :
une deuxième sous-unité de contrôle configurée pour contrôler, après que la pompe à eau du climatiseur est commandée pour être mise en marche lorsqu'il est déterminé que le climatiseur passe en mode dégel, un état de marche-arrêt du mode dégel ;
une deuxième sous-unité de minutage configurée pour effectuer, lorsqu'il est contrôlé que le mode dégel est suspendu, un minutage du fonctionnement ; et
une deuxième sous-unité de commande d'arrêt configurée pour commander l'arrêt de la pompe à eau du climatiseur lorsque le minutage atteint un deuxième seuil de temps prédéfini.

11. Pompe à eau d'un climatiseur, **caractérisée en ce qu'**elle comprend l'appareil de commande de la pompe à eau du climatiseur selon la revendication 6.
